# EUROPÄISCHE PATENTANMELDUNG

(11) **EP 3 974 487 A1**
(43) Veröffentlichungstag der Anmeldung: **30.03.2022**
(21) Anmeldenummer: 20197815.2
(22) Anmeldetag: 23.09.2020
(51) Int. Cl.: C09J 5/00, B29C 65/82

(54) **VERFAHREN ZUM HERSTELLEN EINER KLEBEVERBINDUNG**

(71) Anmelder: Ivoclar Vivadent AG, 9494 Schaan (LI)
(72) Erfinder: Nicola BITAR, 9462 Montlingen (DE)
(74) Vertreter: Splanemann

(57) **Zusammenfassung**

Die vorliegende Erfindung betrifft ein Verfahren zum Herstellen einer Klebeverbindung, mit den Schritten eines Härtens (S101) eines lichthärtenden Klebematerials mittels Lichts; eines Erfassens (S102) eines Polymerisationsgrades des Klebematerials; und eines Beendens (S103) des Härtens bei einem vorgegebenen Polymerisationsgrad.

In einer bevorzugten Ausführungsform erfolgt das Erfassen des Polymerisationsgrades mittels eines Ultraschallverfahrens.

## Beschreibung

Die vorliegende Erfindung betrifft ein Verfahren zum Herstellen einer lichthärtenden Klebeverbindung und eine Herstellungsvorrichtung zum Herstellen einer lichthärtenden Klebeverbindung.

Es ist die technische Aufgabe der vorliegenden Erfindung, eine Klebeverbindung in kurzer Zeit und mit geringem Einsatz an Energie herzustellen. Daneben ist es eine Aufgabe der vorliegenden Erfindung, einen Klebevorgang zu überwachen und zu steuern.

Diese technische Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die technische Aufgabe durch Verfahren zum Herstellen einer Klebeverbindung gelöst, mit den Schritten Härten eines lichthärtenden Klebematerials mittels Lichts; eines Erfassens eines Polymerisationsgrades des Klebematerials; und eines Beendens des Härtens bei einem vorgegebenen Polymerisationsgrad. Dadurch kann der Härtevorgang dann abgebrochen werden, wenn die Klebeverbindung eine ausreichende Festigkeit aufweist. Ein Härten der Klebeverbindung über einen vorbestimmten Zeitraum ist nicht erforderlich. Die Klebeverbindung kann daher schneller als mit herkömmlichen Verfahren hergestellt werden. Das Verfahren unterscheidet sich von anderen Klebeverfahren durch eine klebezustand-gesteuerte Belichtung. Zudem ist eine zerstörungsfreie Qualitätskontrolle möglich, bei der eine nicht funktionierende Klebestelle aussortiert werden kann, ohne einen zusätzlichen Test durchzuführen.

In einer technisch vorteilhaften Ausführungsform des Verfahrens wird das Erfassen des Polymerisationsgrades kontinuierlich während des Härtens durchgeführt. Dadurch wird beispielsweise der technische Vorteil erreicht, dass das Härten zeitlich unmittelbar bei einem Erreichen des vorgegebenen Polymerisationsgrads beendet werden kann.

In einer weiteren technisch vorteilhaften Ausführungsform des Verfahrens wird das Erfassen des Polymerisationsgrades mittels eines Ultraschallverfahrens durchgeführt. Dadurch wird beispielsweise der technische Vorteil erreicht, dass der Zustand der Klebeverbindung präzise bestimmt werden kann.

In einer weiteren technisch vorteilhaften Ausführungsform des Verfahrens umfasst das Ultraschallverfahren eine Schallgeschwindigkeitsmessung, eine Schallresonanzmessung und/oder eine Schallpegelmessung. Dadurch wird beispielsweise der technische Vorteil erreicht, dass besonders geeignete Verfahren zum Erfassen des Polymerisationsgrades verwendet werden. Der Polymerisationsgrad des Klebematerials kann auf diese Weise genau bestimmt werden so dass sich auf eine Haftung der Verklebung schließen lässt.

In einer weiteren technisch vorteilhaften Ausführungsform des Verfahrens wird ein Anfangswert des Polymerisationsgrades vor einem Beginn des Härtens bestimmt. Dadurch wird beispielsweise der technische Vorteil erreicht, dass der Polymerisationsgrad auf Basis eines Anfangszustandes des Klebematerials genau bestimmt werden kann. Der Anfangswert wird beispielsweise als Referenzwert wird zu Anfang aufgenommen, so dass Schwankungen in der Ankoppelung oder im Material ausgeblendet werden können. Hierdurch können Schwankungen im Grundmaterial ermittelt und ausgeblendet werden. Zudem kann das Verhalten des Gesamtsystems ermittelt werden, beispielsweise der werkstückspezifischen Geometrie, der Kleberschichtdicke, oder das Vorhandensein von Luftblasen.

In einer weiteren technisch vorteilhaften Ausführungsform des Verfahrens wird der aktuelle Polymerisationsgrad auf Basis des Anfangswertes berechnet. Beispielsweise wird aus einem später gemessenen Polymerisationsgrad und dem Anfangswert ein Differenzwert gebildet. Überschreitet der Differenzwert einen vorgegebenen Wert liegt eine ausreichende Polymerisation und damit Härtung der Klebestelle vor. Dadurch wird beispielsweise ebenfalls der technische Vorteil erreicht, dass der Polymerisationsgrad des Klebematerials auf Basis eines Anfangszustandes genau bestimmt werden kann.

In einer weiteren technisch vorteilhaften Ausführungsform des Verfahrens wird das Härten mittels mehrerer Lichtquellen durchgeführt. Dadurch wird beispielsweise ebenfalls der technische Vorteil erreicht, dass die Klebeverbindung gleichmäßig von mehreren Stellen gehärtet werden kann. Der Polymerisationsgrad kann beispielsweise ortsaufgelöst bestimmt werden, so dass nur Lichtquellen an denjenigen Stellen aktiviert werden, an der Polymerisationsgrad noch nicht den vorgegebenen Wert erreicht hat.

In einer weiteren technisch vorteilhaften Ausführungsform des Verfahrens wird das Härten beendet, falls der vorgegebene Polymerisationsgrad nicht innerhalb einer vorgegebenen Zeit erreicht wird. Dadurch wird beispielsweise der technische Vorteil erreicht, dass ein Verschwenden von Energie verhindert wird, wenn sich die Klebeverbindung nicht mehr herstellen lässt. Zudem wird ein Qualitätskriterium erreicht, bei dem Bauteile mit fehlerhaften Klebestellen aussortiert werden können. Außerdem kann im Anschluss gezielt nach einer Ursache bei diesem Bauteil gesucht und entschieden werden, ob sogar eine größere Charge betroffen ist.

In einer weiteren technisch vorteilhaften Ausführungsform des Verfahrens wird der erfasste maximale Polymerisationsgrad und/oder der Polymerisationsverlauf als digitale Werte gespeichert. Dadurch wird beispielsweise der technische Vorteil erreicht, dass der digitale Wert einem bestimmten Bauteil zur Qualitätssicherung zugeordnet werden kann und im weiteren Prozess weiterverarbeitet werden kann. Es kann bei Reklamationen auf die gespeicherten Daten zurückgegriffen werden.

Gemäß einem zweiten Aspekt wird die technische Aufgabe durch eine Herstellungsvorrichtung zum Herstellen einer lichthärtenden Klebeverbindung gelöst, mit einer Lichtquelle zum Härten eines lichthärtenden Klebematerials mittels Lichts; einer Erfassungsvorrichtung zum Erfassen eines Polymerisationsgrades des Klebematerials; und einer Steuerungsvorrichtung zum Beenden des Härtens bei einem vorgegebenen Polymerisationsgrad. Durch die Herstellungsvorrichtung werden die gleichen technischen Vorteile wie durch das Verfahren nach dem ersten Aspekt erreicht.

In einer technisch vorteilhaften Ausführungsform der Herstellungsvorrichtung umfasst die Herstellungsvorrichtung mehrere Lichtquellen. Dadurch wird beispielsweise der technische Vorteil erreicht, dass das Härten der Klebeverbindung gleichmäßig durchgeführt werden kann.

In einer weiteren technisch vorteilhaften Ausführungsform der Herstellungsvorrichtung ist die Erfassungsvorrichtung durch eine Ultraschallvorrichtung zum Durchführen einer Schallgeschwindigkeitsmessung, eine Schallresonanzmessung und/oder eine Schallpegelmessung gebildet. Dadurch wird beispielsweise ebenfalls der technische Vorteil erreicht, dass der Zustand der Klebeverbindung präzise bestimmt werden kann.

In einer weiteren technisch vorteilhaften Ausführungsform der Herstellungsvorrichtung umfasst die Herstellungsvorrichtung einen digitalen Speicher zum Speichern des erfassten maximalen Polymerisationsgrad und/oder eines Polymerisationsverlaufes als digitale Werte. Dadurch wird beispielsweise ebenfalls der technische Vorteil erreicht, dass der digitale Wert einem bestimmten Bauteil zur Qualitätssicherung zugeordnet werden kann und im Weiteren Prozess weiterverarbeitet werden kann.

In einer weiteren technisch vorteilhaften Ausführungsform der Herstellungsvorrichtung ist die Steuerungsvorrichtung ausgebildet, das Härten zu beenden, falls der vorgegebene Polymerisationsgrad nicht innerhalb einer vorgegebenen Zeit erreicht wird. Dadurch wird beispielsweise ebenfalls der technische Vorteil erreicht, dass ein Verschwenden von Energie und Zeit verhindert wird, wenn sich die Klebeverbindung nicht mehr herstellen lässt.

In einer weiteren technisch vorteilhaften Ausführungsform der Herstellungsvorrichtung ist die Steuerungsvorrichtung ausgebildet, einen Anfangswert des Polymerisationsgrades vor einem Beginn des Härtens zu bestimmen und den aktuellen Polymerisationsgrad auf Basis des Anfangswertes zu berechnen. Der vor dem Belichten gemessene Anfangswert wird als Nullpunkt gesetzt. Die während der Belichtung gemessene Veränderung kann dann als Kriterium für das Beenden des Härtens herangezogen werden.

Dadurch wird beispielsweise ebenfalls der technische Vorteil erreicht, dass der Polymerisationsgrad auf Basis eines Anfangszustandes genau bestimmt werden kann. Hierdurch können Schwankungen im Grundmaterial ermittelt und ausgeblendet werden.

Ausführungsbeispiele der Erfindung sind in den Zeichnungen dargestellt und werden im Folgenden näher beschrieben.

Es zeigen:
- Fig. 1: eine schematische Ansicht einer Herstellungsvorrichtung zum Herstellen einer lichthärtenden Klebeverbindung;
- Fig. 2: eine Grenzflächenauswertung mittels eines Puls-Echo Verfahrens;
- Fig. 3: einen Regelkreis zum Steuern einer Belichtung; und
- Fig. 4: ein Blockdiagramm eines Verfahrens zum Herstellen einer Klebeverbindung; und

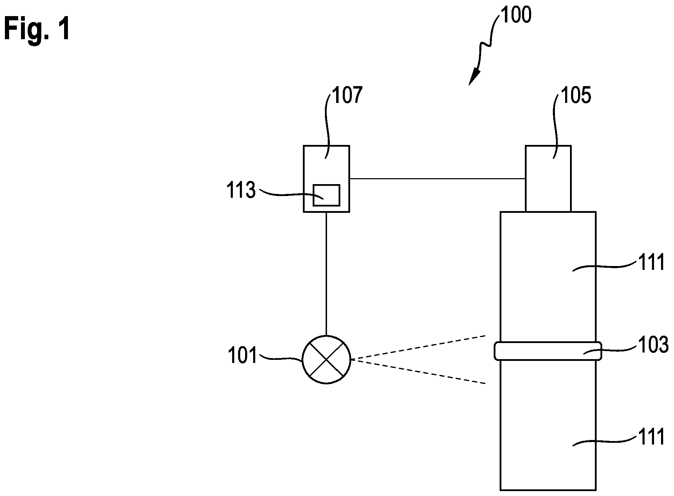

Fig. 1 zeigt eine schematische Ansicht einer Herstellungsvorrichtung 100 zum Herstellen einer lichthärtenden Klebeverbindung zwischen zwei Bauteilen 111. Zu diesem Zweck wird zwischen den beiden Bauteile 111 ein lichthärtendes Klebematerial 103 angeordnet. Das lichthärtende Klebematerial 103 ist ein polymeres Material, das beispielsweise bei der Bestrahlung mit ultraviolettem Licht polymerisiert und dadurch aushärtet (UV-härtender Klebstoff). Das Licht wird durch eine elektrische Lichtquelle 101, wie beispielsweise eine Leuchtdiode, bereitgestellt, die durch eine elektrische Steuerungsvorrichtung 107 aktiviert und deaktiviert werden kann. Im Allgemeinen kann die Herstellungsvorrichtung 100 auch mehrere Lichtquellen 101, die um die Klebestelle herum angeordnet sind.

Das lichthärtende Klebematerial 103 ist beispielsweise ein Klebstoff auf der Basis von Urethanmethacrylat, der bei Raumtemperatur bei einer Bestrahlung von ultraviolettem Licht aushärtet.

Um einen Polymerisationsgrad des Klebematerials 103 zu bestimmen, wird ein Ultraschallverfahren verwendet. Die Ultraschallwellen werden mittels einer Erfassungsvorrichtung 105, wie beispielsweise einem Ultraschallsensor mit einem Ultraschallkopf als Aktor, in eines der Bauteile 111 eingekoppelt. Zum Bestimmen des Polymerisationsgrades des Klebematerials 103 wird eine Schallgeschwindigkeitsmessung, Schallresonanzmessung oder Schallpegelmessung während der Belichtung mit dem ultravioletten Licht durchgeführt. Die Ultraschallmessung kann auf einer Durchschallung oder einem Puls-Echoverfahren basieren.

Für das Bestimmen des Polymerisationsgrades wird zunächst ein Anfangswert durch die Ultraschallmessung bestimmt, bei dem noch keine lichtinduzierte Polymerisation des Klebematerials 103 stattgefunden hat. Der Anfangswert entspricht einem Polymerisationsgrad von Null. Anschließend wird die Lichtquelle 101 aktiviert. Danach wird von der Steuerungsvorrichtung 107 überwacht, um welchen Betrag der Anfangswert ansteigt. Sobald der kontinuierlich gemessene Wert den Anfangswert um einen vorgegebenen Betrag überschreitet, wird die Lichtquelle von der Steuerungsvorrichtung 107 deaktiviert.

Die Ultraschallmessung wird somit von Anfang bis zum Ende der Belichtung durchgeführt, so dass sich eine Differenz zwischen dem ursprünglichen Anfangswert und dem nachherigen Messwert ermitteln lässt. Der Anfangswert kann auch zur Prüfung des Klebematerials 103 im unpolymerisierten Zustand herangezogen werden, so dass sich beispielsweise die Menge des aufgetragenen Klebematerials 103 ermitteln lässt.

Durch die Herstellungsvorrichtung 100 wird die Belichtung nicht nach einer festgelegten Zeit beendet, sondern aufgrund einer Ultraschall-Geschwindigkeitsmessung, -Resonanzmessung oder -Pegelmessung deren Messung auf den vorgegebenen Schwellwert über oder unterschreitet. Es findet daher keine zeitgesteuerte Beendigung auf Basis einer festen vorgegebenen Zeit statt, sondern eine Beendigung auf Basis eines zu erreichenden Polymerisationsgrades, der der Haftung an der Klebestelle entspricht. Die Belichtung wird daher aufgrund einer Ultraschallpegelüberschreitung oder Schallgeschwindigkeitsmessung beendet, die eine ausreichende Härtung und Haftung des Klebematerials 103 nachweist. Bei dem Ultraschallverfahren wird eine Messwertveränderung als Ausschaltkriterium verwendet (Aktivierung des Klebstoffes zur Polymerisation).

Im Ergebnis wird durch die Herstellungsvorrichtung 100 das Klebematerial 103 schneller und qualitativ besser polymerisiert. Wird das Erfassen des Polymerisationsgrades kontinuierlich während des Härtens durchgeführt, kann eine aktive Überwachung der Polymerisation erfolgen, bei der ein Benutzer dadurch den Klebeprozess nachverfolgen und das Fortschreiten des Klebeprozesses überwachen kann.

Die Steuerungsvorrichtung 107 kann zudem einen digitalen Speicher 113 umfassen, in dem der erfasste maximale Polymerisationsgrad für jedes Bauteil 111 als digitaler Wert abgelegt wird. Der digitale Speicher 113 ist beispielsweise ein elektronischer Speicherbaustein oder eine Festplatte. Hierdurch lässt sich in einem Produktionsprozess für jedes Bauteil 111 die Qualität der Klebeverbindung überprüfen und in Verbindung mit dem entsprechenden Bauteil in einem Datensatz abspeichern. Der Datensatz kann im Laufe des Produktionsprozesses weiterverarbeitet werden.

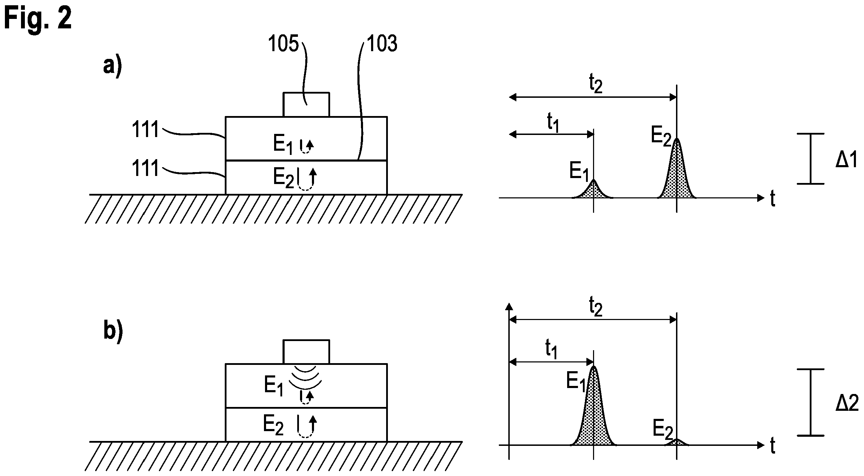

Fig. 2 zeigt eine Grenzflächenauswertung der Klebeverbindung mittels eines Puls-Echo Verfahrens. Ein Schallkopf als Erfassungsvorrichtung 105 steht in mechanischem Kontakt mit dem oberen Bauteil 111 und strahlt die Ultraschallwellen in die Bauteile 111 mit dem Klebematerial 103 ein.

Im Fall a) wird der Wert E1 zu einer Zeit T1 gemessen. Zum Zeitpunkt T2 während oder nach einer Belichtung wird der Wert E2 gemessen, der den Wert E1 um einen Betrag Δ1=E2-E1 überschreitet. Dies liegt daran, dass durch das ausgehärtete Klebematerial 103 die Ultraschallwellen in das untere Bauteil 111 übertragen werden und von der unteren Grenzfläche übertragen werden.

Liegt dieser Betrag Δ1 über einem vorgegebenen Wert Δ_{SOLL}, so wird eine ausreichende Polymerisation und Härtung des Klebematerials 103 angezeigt. Ein direkter Vergleich des vorherigen Wertes E1 mit dem nachherigen Wert E2 ermöglicht einen besseren Rückschluss auf die Haftung und Polymerisation des Klebematerials 103. Es entsteht eine Unabhängigkeit von Produktunterschieden, da Dimpelhöhe und Trennwandechodivergenzen ausgeblendet werden können.

Im Fall b) wird ebenfalls der Wert E1 zu einer Zeit T1 gemessen. Zum Zeitpunkt T2 während oder nach einer Belichtung wird der Wert E2 gemessen, der den Wert E1 um einen Betrag Δ2=E2-E1 unterschreitet. In diesem Fall ist die Klebeverbindung zwischen den Bauteilen unzureichend und es werden keine Ultraschallwellen in das untere Bauteil 111 übertragen. In diesem Fall wird eine unzureichende Polymerisation und Härtung des Klebematerials 103 angezeigt und die Belichtung wird abgebrochen.

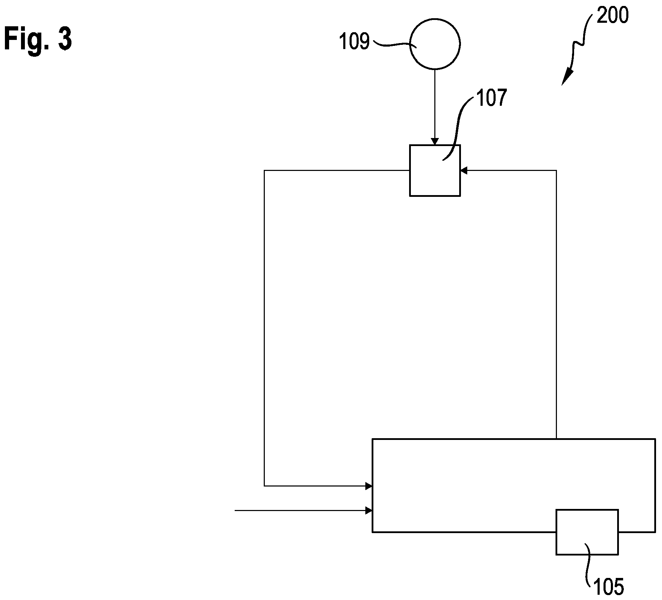

Fig. 3 zeigt einen Regelkreis 200 zum Steuern einer Belichtung. Der gemessene Wert für den Polymerisationsgrad wird an einen Regler der Steuerungsvorrichtung 107 übertragen und mit einer Führungsgröße 109 verglichen, die dem vorgegebenen Polymerisationsgrad entspricht. Sobald der gemessene Wert den Polymerisationsgrad übersteigt, wird die Lichtquelle 101 deaktiviert.

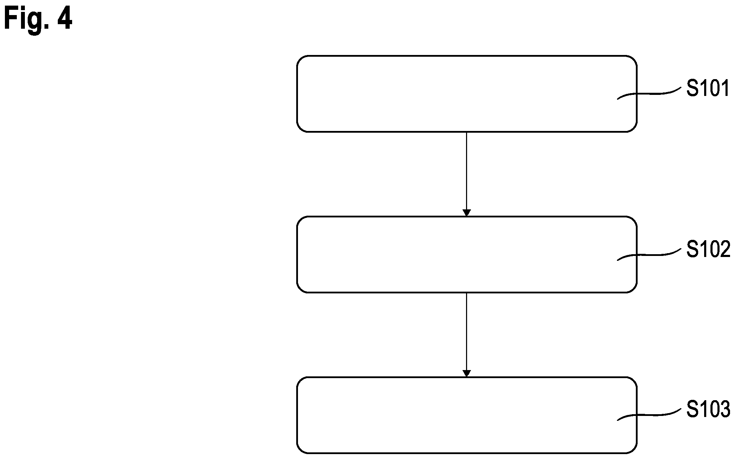

Fig. 4 zeigt ein Blockdiagramm eines Verfahrens zum Herstellen der Klebeverbindung zwischen den Bauteilen 111. In einem ersten Schritt S101 wird das lichthärtende Klebematerial 103 mittels Lichts gehärtet. Im Schritt S102 wird der Polymerisationsgrades des Klebematerials 103 durch die Erfassungsvorrichtung 103 erfasst. In Schritt S103 wird das Härten bei Erreichen eines vorgegebenen Polymerisationsgrad, d.h. bei einer vorgegebenen Haftung an der Klebestelle, beendet.

Dadurch erfolgt eine direkte Verkettung der Belichtung mit UV-Licht mit einer Ultraschallmessung, so dass das Erreichen der gewünschten Endfestigkeit des Klebematerials 103 gemessen werden kann. Falls diese Endfestigkeit nicht in einer gewissen vorgegebenen Zeitspanne erreicht, kann eine Qualitätsinstabilität im Klebstoff bei der Produktion erfasst werden. Dies kann als zusätzlicher Ausschussparameter bei der Produktion verwendet werden und ebenfalls in dem digitalen Speicher 113 in Verbindung mit dem Bauteil abgelegt werden.

Ein vorbestimmtes Schallverhalten der Ultraschallpegelmessung wird als Beendigung der Belichtungszeit festgelegt. Eine Ultraschall-Geschwindigkeitsmessung, Resonanzmessung oder Pegelmessung, die den vorgegebenen Schwellwert über- oder unterschreitet, beendet den Belichtungsvorgang. Mit diesem Verfahren wird die Polymerisation des Klebematerials 103 gemessen und je nach erreichtem Polymerisationsgrad das Licht ausgeschaltet. Durch das aktive Beenden der Belichtung sorgt das Verfahren für eine optimierte Klebezeit oder Belichtungszeit, so dass eine Zeiteinsparung ermöglicht wird.

Auf diese Weise lässt sich beim Herstellen der Klebeverbindung Zeit sparen, da keine Reservezeiten für sicheres Aushärten eingeplant werden müssen. Gleichzeitig erfolgt eine zerstörungsfreie Prüfung der Klebeverbindung. Zusätzlich kann eine Polymerisation (Festigkeit) des Klebematerials 103 nachgewiesen werden, so dass qualitative Aussagen zur Polymerisation ermöglicht werden und als digitale Werte abgespeichert werden können.

Wird der vorgegebene Polymerisationsgrad Δ_{SOLL} nicht innerhalb einer vorgegebenen Zeit erreicht, kann das Härten ebenfalls aktiv beendet werden. Dadurch kann ein Ausschusskriterium für die zu klebenden Bauteile 111 definiert werden. Auf diese Weise können Materialfehler, wie beispielsweise Blasen oder Risse, im Material erkannt werden.

Dadurch wird eine Qualitätskontrolle der Klebeverbindung realisiert, so dass eine Endkontrolle entfallen kann, bei der eine ausreichende Haftung der Klebeverbindung überprüft wird.

Hierdurch wird ein potenzieller Prüfungsaufwand reduziert, da beispielsweise ein Schertest auf einer Anlage entfallen kann.

Das Klebeverfahren kann im Dentalbereich eingesetzt werden, beispielsweise bei polymerisierbaren Komposit-Materialien, Füllungsmaterialien und Zementen. Das Klebeverfahren kann aber auch für ein industrielles Kleben verwendet werden, wie beispielsweise bei Mobiltelefonen oder in der Automobilindustrie.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Herstellungseinrichtung
- 101: Lichtquelle
- 103: Klebematerial
- 105: Erfassungsvorrichtung
- 107: Steuerungsvorrichtung
- 109: Führungsgröße
- 111: Bauteil
- 113: digitaler Speicher

- 200: Regelkreis

## Patentansprüche

1. Verfahren zum Herstellen einer Klebeverbindung, mit den Schritten:
- Härten (S101) eines lichthärtenden Klebematerials (103) mittels Lichts;
- Erfassen (S102) eines Polymerisationsgrades des Klebematerials (103); und
- Beenden (S103) des Härtens bei einem vorgegebenen Polymerisationsgrad.

2. Verfahren nach Anspruch 1, wobei das Erfassen des Polymerisationsgrades kontinuierlich während des Härtens durchgeführt wird.

3. Verfahren nach einem der vorangehenden Ansprüche, wobei das Erfassen des Polymerisationsgrades mittels eines Ultraschallverfahrens durchgeführt wird.

4. Verfahren nach Anspruch 3, wobei das Ultraschallverfahren eine Schallgeschwindigkeitsmessung, eine Schallresonanzmessung und/oder eine Schallpegelmessung umfasst.

5. Verfahren nach einem der vorangehenden Ansprüche, wobei ein Anfangswert des Polymerisationsgrades vor einem Beginn des Härtens bestimmt wird.

6. Verfahren nach einem der vorangehenden Ansprüche, wobei der aktuelle Polymerisationsgrad auf Basis des Anfangswertes berechnet wird.

7. Verfahren nach einem der vorangehenden Ansprüche, wobei das Härten mittels mehrerer Lichtquellen (101) durchgeführt wird.

8. Verfahren nach einem der vorangehenden Ansprüche, wobei das Härten beendet wird, falls der vorgegebene Polymerisationsgrad nicht innerhalb einer vorgegebenen Zeit erreicht wird.

9. Verfahren nach einem der vorangehenden Ansprüche, wobei der erfasste maximale Polymerisationsgrad und/oder der Polymerisationsverlauf als digitale Werte gespeichert wird.

10. Herstellungsvorrichtung (100) zum Herstellen einer lichthärtenden Klebeverbindung, mit:
- einer Lichtquelle (101) zum Härten eines lichthärtenden Klebematerials (103) mittels Lichts;
- einer Erfassungsvorrichtung (105) zum Erfassen eines Polymerisationsgrades des Klebematerials (103); und
- einer Steuerungsvorrichtung (107) zum Beenden des Härtens bei einem vorgegebenen Polymerisationsgrad.

11. Herstellungsvorrichtung (100) nach Anspruch 10, wobei die Herstellungsvorrichtung (100) mehrere Lichtquellen (101) umfasst.

12. Herstellungsvorrichtung (100) nach Anspruch 10 oder 11, wobei die Erfassungsvorrichtung (105) durch eine Ultraschallvorrichtung zum Durchführen einer Schallgeschwindigkeitsmessung, eine Schallresonanzmessung und/oder eine Schallpegelmessung gebildet ist.

13. Herstellungsvorrichtung (100) nach einem der Ansprüche 10 bis 12, wobei die Herstellungsvorrichtung (100) einen digitalen Speicher (113) zum Speichern des erfassten maximalen Polymerisationsgrad und/oder eines Polymerisationsverlaufes als digitale Werte umfasst.

14. Herstellungsvorrichtung (100) nach einem der Ansprüche 10 bis 13, wobei die Steuerungsvorrichtung (107) ausgebildet ist, das Härten zu beenden, falls der vorgegebene Polymerisationsgrad nicht innerhalb einer vorgegebenen Zeit erreicht wird.

15. Herstellungsvorrichtung (100) nach einem der Ansprüche 10 bis 14, wobei die Steuerungsvorrichtung (107) ausgebildet ist, einen Anfangswert des Polymerisationsgrades vor einem Beginn des Härtens zu bestimmen und den aktuellen Polymerisationsgrad auf Basis des Anfangswertes zu berechnen.
